# EUROPÄISCHE PATENTSCHRIFT

(11) **EP 1 348 748 B1**
(45) Veröffentlichungstag und Bekanntmachung des Hinweises auf die Patenterteilung: **09.08.2006**
(21) Anmeldenummer: 03005088.4
(22) Anmeldetag: 07.03.2003
(51) Int. Cl.: C09J 4/06, C08F 265/06, C08F 220/18, B32B 7/12

(54) **Verfahren zur Herstellung von Kaschierklebemassen und Kaschierverklebungen**
Process for the preparation of laminating adhesives and laminates obtained by using these adhesives
Procédé de préparation d'adhésifs pour stratifiés et laminés obtenus à base de ces adhésifs

(30) Priorität: 27.03.2002 DE 10213642
(43) Veröffentlichungstag der Anmeldung: 01.10.2003
(73) Patentinhaber: tesa AG, 20253 Hamburg (DE)
(72) Erfinder: Husemann, Marc, Dr., 22605 Hamburg (DE); Zöllner, Stephan, Dr., 22043 Hamburg (DE)

(56) Entgegenhaltungen:
- US-A- 4 181 752
- US-A- 4 714 655
- DATABASE WPI Derwent Publications Ltd., London, GB; AN 1974-86186v XP002248354 "Resin-impregnated decorative board" & JP 49 050107 A (EIDAI CO. LTD.), 15. Mai 1974 (1974-05-15)

## Beschreibung

Die Erfindung betrifft ein Verfahren zur Herstellung von UV-Kaschierklebemassen, wobei die Kaschierkleber i. a. zwischen einer Folie und einem zu kaschierenden Gegenstand aufgetragen werden und zwischen dem Laminat mit UV-Licht ausgehärtet werden.

Haftklebemassen können sehr individuell hergestellt und unterschiedlich angewendet werden. Sehr variabel sind z.B. Acrylathaftklebemassen, da hier eine Vielzahl unterschiedlicher Comonomere zur Polymerisation eingesetzt werden können und somit sich die klebtechnischen Eigenschaften variieren lassen. Als Comonomere werden als Hauptkomponente üblicherweise Alkylester der Acryl- und Methacrylsäure eingesetzt, in geringeren Anteilen zumeist Acrylsäure, Methacrylsäure, Acrylamide, Maleinsäureanhydrid, Hydroxyacrylate oder Itakonsäure. Zur Herstellung dieser Polyacrylate wird die radikalische Polymerisation in Lösung oder in Emulsion angewandt. Beide Techniken weisen Probleme auf, sind aber sehr kostengünstig und werden daher seit langem in der Produktion durchgeführt.

Zur Herstellung von Haftklebebändern werden die Polyacrylate zumeist aus Lösung auf das Trägermaterial beschichtet und anschließend das Lösungsmittel oder Wasser (für Emulsionen) in aufwendigen Öfen und mit hohem Energieeintrag entfernt. Als Kaschierklebemassen lassen sich diese Varianten nicht einsetzen, das das Lösemittel aus dem verklebten Verbund nicht entfernt werden kann.

Dagegen ist die UV-Polymerisation ein sehr effizientes Verfahren zur Herstellung von Polyacrylaten. Im niederländischen Patent 7,308,811 wurden Acrylate polymerisiert und vernetzt durch die Einstrahlung von UV-Licht. Die hergestellten Polymere wurden aber nicht als Klebemassen verwendet.

Im Patent US 4,181,752 werden UV-Präpolymerisate hergestellt, die nach Beschichtung auf dem Träger zu vollständigem Umsatz polymerisiert und vernetzt werden. Die Reaktivität der eingesetzten Fotoinitiatoren war jedoch sehr limitiert. Auch weist die UV-Präpolymerisation generelle Probleme auf, da die durch die UV-Bestrahlung mit freien Radikalen die Polymerisation initiiert wird. Nach der Herstellung des Acrylat-Syrups wird die Polymerisation abgebrochen und das Monomer/Polymergemisch auf einen Träger beschichtet. Die zweite Polymerisation zu vollständigem Umsatz wird häufig durch einen zweiten Fotoinitiator mit einem unterschiedlichen Wellenlängenbereich erzielt.

Durch den zweiten UV-Bestrahlungscyclus wird die zweite Polymerisation initiiert, wobei, da das Präpolymer keine Doppelbindungen enthält, neue Polymerketten aufgebaut werden und somit das Präpolymer nicht in die neuen Polymerketten eingebaut wird. Dies ist für Kaschierverklebungen von großem Nachteil, da die Präpolymere mit niedrigerem mittleren Molekulargewicht aus der Verklebung eher herausdiffundieren können.

Die Aufgabe der Erfindung bestand darin, einen Kaschierkleber auf Polyacrylatbasis bereitzustellen, der die genannten Nachteile im Stand der Technik vermeidet.

Der Erfindung liegt die Erkenntnis zugrunde, dass sich UV-Polyacrylatkaschierklebemassen am besten über den Weg der ES-initiierten Präpolymerisation herstellen lassen, um das Präpolymerisat durch die folgenden UV-initiierte Polymerisation wiederum in die neue Polymerkette einzubauen.
Mehnert [Tätigkeitsbereicht 1994/95 IOM Leipzig] veröffentlichte den Polymerisationsmechnismus für die Elektronen-Strahl-induzierte Polymerisation von Acrylaten. Da diese Polymerisation mit einem Radikalkation gestartet wird, enthält das Polymerisat als Endgruppe immer eine Doppelbindung.

Demgemäß ist Gegenstand der Erfindung ein Verfahren zur Herstellung von Kaschierklebemassen, wobei aus einer Monomerenzusammensetzung, die 70 bis 100 Gew.-% Acrylsäure und/oder Methacrylsäure-Derivate der allgemeinen Formel (I) enthält

CH₂=C(R₁)(COOR₂) (I)

,mit R₁ = H oder CH₃ und R₂ = einer Alkylkette mit 2-20 C-Atomen,
durch eine unter Elektronen-Bestrahlung initiierte Polymerisation ein Präpolymerisat hergestellt wird, das als UV-härtbare Kaschierklebemasse verwendbar ist.

In einer vorteilhaften Ausführungsform wird die Erfindung wie folgt durchgeführt:

Zur Polymerisation werden:
(A) Acrylsäure und Methacrylsäure-Derivate mit einem Anteil von 70-100 Gewichtsprozent,

   CH₂=C(R₁)(COOR₂) (I)

   wobei R₁ = H oder CH₃ ist und R₂ = eine Alkylkette mit 2-20 C-Atomen.
(B) olefinisch ungesättigte Monomere mit funktionellen Gruppen, zu 0 - 30 Gew.-%, bezogen auf Komponente (A),
   und
   0.1 - 5 Gewichtsprozent eines Fotoinitiators oder eines Gemisches aus mehreren Fotoinitatoren, wobei die UV-Polymerisation beschleunigende Substanzen beigemischt werden können, verwendet.

Das Verfahren wird dann vorteilhaft so geführt, dass:
- die Polymerisation unter Elektronen-Bestrahlung initiiert wird,
- nach Abbruch der Polymerisation das Präpolymerisat direkt als Kaschierkleber eingesetzt wird oder nochmal zur Verdünnung mit Acrylatmonomeren aus (A) und/oder (B) abgemischt wird und
- nach der Kaschierverklebung mit UV-Licht das Laminat vollständig bis zu einem Umsatz größer 98.5 % durchgehärtet wird.

Weiterhin können vor der vollständigen UV-initiierten Polymerisation weitere Monomere der erfindungsgemäßen Monomerenzusammensetzung, insbesondere aus (A) und/oder (B), zum Syrup hinzugesetzt oder gemischt werden.

In einer sehr bevorzugten Weise werden Acryl- oder Methacrylmomonere eingesetzt, die aus Acryl- und Methacrylsäureester mit Alkylgruppen aus 4 bis 14 C-Atomen bestehen, bevorzugt 4 bis 9 C-Atomen umfassen. Spezifische Beispiele, ohne sich durch diese Aufzählung einschränken zu wollen, sind Methlacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat.
Weitere einzusetzende Verbindungsklassen sind monofunktionelle Acrylate bzw. Methacrylate von überbrückten Cycloalkylalkoholen, bestehend aus zumindestens 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylacrylat.

In einer Vorgehensweise werden Monomere (B) eingesetzt, die polare Gruppen wie Carboxylreste, Sulfon- und Phosphonsäure, Hydroxyreste, Lactam und Lacton, N-substituiertes Amid, N-substituiertes Amin, Carbamat-, Epoxy-, Thiol-, Alkoxy-. Cyanreste, Ether oder ähnliches tragen.

Moderate basische Monomere (B) sind z.B. N,N-Dialkylsubstituierte Amide, wie z.B. N,N-Dimethylacrylamid, N,N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethacrylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid, wobei diese Aufzählung nicht abschließend ist.

Weitere bevorzugte Beispiele für Monomere (B) sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Glycerylmethacrylat, 6-Hydroxyhexylmethacrylat, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren sehr bevorzugten Vorgehensweise werden als Monomere (B) Vinylester, Vinylether, Vinylhalogenide, Vinylidenhalogenide, Vinylverbindungen mit aromatischen Cyclen und Heterocyclen in α-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

Weiterhin werden in einer weiteren Vorgehensweise Photoinitiatoren mit einer copolymerisierbaren Doppelbindung eingesetzt. Als Photoinitiatoren sind Norrish-I- und -II-Photoinitiatoren geeignet. Beispiele sind z.B. Benzoinacrylat und ein acryliertes Benzophenon der Fa. UCB (Ebecryl P 36®). Im Prinzip können alle dem Fachmann bekannten Photoinitiatoren copolymerisiert werden, die das Polymer über einen Radikalmechanismus unter UV-Bestrahlung vernetzen können. Ein Überblick über mögliche einsetzbare Photoinitiatoren die mit einer Doppelbindung funktionalisiert werden können, wird in Fouassier: "Photoinititation, Photopolymerization and Photocuring: Fundamentals and Applications", Hanser-Verlag, München 1995, gegeben. Ergänzend wird Carroy et al. in emistry and Technology of UV and EB Formulation for Coatings, Inks and Paints", Oldring (Hrsg.), 1994, SITA, London eingesetzt.

In einer weiteren bevorzugten Vorgehensweise werden zu den beschriebenen Comonomeren Monomere (B) hinzugesetzt, die eine hohe statische Glasübergangstemperatur besitzen. Als Komponenten eigenen sich aromatische Vinylverbindungen, wie z.B. Styrol, wobei bevorzugt die aromatischen Kerne aus C₄- bis C₁₈-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und -methacrylat, 2-Naphthylacrylat und -methacrylat sowie Mischungen aus denjenigen Monomeren, wobei diese Aufzählung nicht abschließend ist.

Die Polymerisation erfolgt als in der Regel lösungsmittelfreie Elektronenstrahl-initiierte radikalische Polymerisation in einem geschlossenen Behälter. Als Reaktionsbehälter kann jeder Behälter eingesetzt werden der transparent und stabil für ionisierende Strahlung ist. In bevorzugter Auslegung werden zylindrische Reaktoren aus Glas, Aluminium oder Edelstahl eingesetzt. Weiterhin eignen sich auch Kunststoffbeutel zur Polymerisation, wobei diese Beutel eine zum Monomer silikonisierte Innenschicht besitzen sollten und nach aussen z.B. eine Aluminiumschicht tragen sollten. Als Mittelschicht für den Kunststoffbeutel eignet sich z.B. Polyethylen. Vor dem Einsatz werden die Monomere bevorzugt vom Luftsauerstoff befreit und inertisiert.

Als ionisierende Strahlenquelle kann nahezu jede Strahlenquelle eingesetzt werden, die einen linearen Energie Transfer ermöglicht und Protonen vom Monomer abstrahiert um freie Radikale zu erzeugen. Geeignete Quellen sind z.B. Cobalt 60 oder Cäsium 137.
Die Monomere können in einem weiten Dosisbereich bestrahlt werden, wie z.B. mit einer Dosis von größer 1 kilorad pro Stunde aber kleiner 1 kilorad pro Sekunde. Bevorzugt wird mit einer Dosisrate von 5 bis 250 krad pro Stunde bestrahlt.

Die ES-initiierte Präpolymerisation verläuft nach einem freien radikalischen Mechanismus. Das Monomergemisch wird bevorzugt unter Inertgasatmosphäre, wie z.B. Stickstoff, Helium oder Argon mit ionisierender Strahlung bestrahlt. Die Inertisierung kann durch mehrfaches Evakuiieren mit anschließendem Durchleiten mit Stickstoffgas erfolgen oder durch längeres Durchleiten des Intertisierungsgases durch das Monomergemisch.

Die Monomermischung besitzt zu Beginn üblicherweise eine zu geringe Viskosität, um einfach gehandhabt und als Kaschierkleber verwendet werden zu können. Um die Viskosität ansteigen zu lassen, wird das Monomergemisch bis zu einem Umsatz von 5 - 20 % präpolymerisiert. Die Polymerisation wird durch Abbruch der Bestrahlung gestoppt. Zudem wird - falls nötig - die Temperatur herabgesenkt. In einigen Fällen kann es von Vorteil sein, wenn Sauerstoff durch das Präpolymerisat durchgeleitet wird, um Radikale abzufangen.

Auf dieser Weise bildet sich ein Syrup, der sich gut als Kaschierklebemasse einsetzen lässt. Hierdurch wird auch das Problem der Vergelung umgangen, welches häufig bei Polymerisationen bis zu hohem Umsatz auftritt.

Weiterhin werden die Monomere nach oder vor der Präpolymerisation optional mit Harzen abgemischt. Als Harze sind beispielsweise Terpen-, Terpenphenolharze, C₅- und C₉-Kohlenwasserstoffharze, Pinen-, Inden- und Kolophoniumharze in Kombination miteinander einsetzbar. Prinzipiell lassen sich aber alle in dem entsprechenden Polyacrylat löslichen Harze verwenden, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze.

Um bei der folgenden UV-iniitierten Polymerisation einen hohen Umsatz zu erzielen, kann es erforderlich sein, Vernetzer hinzuzusetzen. Als Vernetzer lassen sich alle bi- oder multifunktionellen Verbindungen einsetzen lassen, deren funktionelle Gruppen mit den Polyacrylaten eine Verknüpfungsreaktion eingehen können, insbesondere Polymerisations-, Polykondensations- oder Polyadditionsreaktionen. Zur UV-Härtung werden multifunktionelle Acrylate bevorzugt, die als Vernetzer während der UV-Härtung fungieren.

Weiterhin lassen sich Weichmacher als Tackverbesserer hinzusetzen, wie z.B. niedermolekulare Polyacrylate, Phthalate, Polyethylenglykole, Zitronensäureester oder Weichharze.

Vor der UV-Polymerisation können den Monomeren UV-absorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte α-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon; wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

Nach bekannten und konventionellen Verfahren wird das reine oder nach genannten Methoden modifizierte Polyacrylat mit Hilfe von Mehrwalzenauftragswerken, Mono-, Schlitz- oder Mehrkanaldüsen auf die Träger-Substrate direkt oder indirekt beschichtet.

Aus der EP 0 622 127 B1 ist bekannt, dass auch über eine Walze druckempfindliche, lösungsmittelfreie Klebstoffschichten auf ein Substrat aufgelegt werden. Als Auftragswerk kommen Ein- oder Mehrkanaldüsen zum Einsatz.
Hervorgerufen durch eine angelegte Differenzgeschwindigkeit zwischen der beschichteten Walze oder dem abnehmenden Substrat wird der vordosierte Klebstoffilm in seiner Dicke reduziert, so dass dünne Haftklebeschichten auf Substrate transferiert werden können.

Zur Kaschierungsverklebung eignen sich diverse Trägermaterialen, wie beispielsweise Folien (Polyester, PET, PE, PP, BOPP, PVC) oder Papiere. Diese Aufzählung soll nicht abschließend sein und es können alle dem Fachmann bekannten unterschiedlichen Materialien zur Kaschierverklebung eingesetzt werden.

Nach der Durchführung der Kaschierverklebung wird der UV-Polymerisationsvorgang eingeleitet.
Die vollständige Polymerisation (Umsatz > 98.5 %) und Vernetzung des erfindungsgemäßen Verfahrens erfolgt durch UV-Bestrahlung im Bereich von 200 - 400 nm mit handelsüblichen Quecksilber-Hochdruck oder Mitteldrucklampen mit einer Leistung von z.B. 80 bis 200 W/cm. Für die UV-Vernetzung kann es angebracht sein, die Strahlerleistung der Bahngeschwindigkeit anzupassen oder die Bahn bei Langsamfahrt teilweise abzuschatten, um ihre thermische Belastung zu verringern. Die Bestrahlungszeit richtet sich nach Bauart und Leistung der jeweiligen Strahler.

### Beispiele

Die Erfindung soll im folgenden durch einige Beispiele näher erläutert werden, ohne sich hierdurch unnötig beschränken zu wollen.
In Abhängigkeit von den gewünschten klebtechnischen Eigenschaften der Klebemassen wird eine Auswahl an Acryl- und Vinylmonomeren getroffen.

### Kaschierfestiqkeit (Test A)

Zur Messung der Kaschierfestigkeit wird ein 20 mm breiter Streifen und etwa 300 mm langer Probenstreifen einer Kaschierverklebung ausgeschnitten. Zur Messung wird eine Zugkraft-Maschine der Fa. Zwick eingesetzt. Das untere Seite der Kaschierverklebung wird in der Maschine unten fixiert, während die obere Seite der Kaschierverklebung im Meßkopf fixiert wird. Für die Messung beträgt der Abzugswinkel etwa 90°, die Abzugsgeschwindigkeit 300 mm/min. Die Messergebnisse sind in N/cm angegeben und sind gemittelt aus drei Messungen. Alle Messungen wurden bei Raumtemperatur unter klimatisierten Bedingungen durchgeführt.

**Tabelle 1: Zusammenfassung der Chemikalien**

| Handelsname | Hersteller | Chemische Beschreibung |
|---|---|---|
| RX 207 | Cray Valley | C5-C9 Kohlenwasserstoffharz |
| Genomer 5248 | Fa. Rahn | Oligoamin mit einer Acrylatgruppe |
| Speedcure ITX | Fa. Rahn | 2-lsopropylthioxanthon und 4-Isopropylthioxanthon |
| Ebecryl P 36 | UCB Chemicals | acryliertes Benzophenon |
| Esacure KIP 150 | Fa. lamberti | α-Hydroxyketon Oligo[2-hydroxy-2-methyl-1 -[4-(1 -methyl-vinyl)phenyl]propanon] |

### Beispiel 1

Eine Mischung aus 5 g Acrylsäure und 95 g 2-Ethylhexylacrylat entgast und mit Stickstoff abgesättigt wurde in einen Polyethylenbeutel unter Sauerstoffausschluss gefüllt. Der PE-Beutel besitzt eine silikonisierte Innenschicht und ist von außen mit Aluminium beschichtet. Dann wurde der Reaktor mit einer Co60 Quelle mit 100 Krad/h und einer Gesamtdosis von 10 Krad bestrahlt. Der Syrup wurde mit 0.5 Gew.-% Esacure KIP 150™ (Fa. Lamberti) abgemischt und auf einen PP-Träger über ein Rakel mit 5 g/m² beschichtet. Kaschiert wurde mit einer zweiten PP-Folie. Zur UV-Polymerisation und Härtung wurde eine UV-Anlage der Fa. Eltosch eingesetzt. Die Anlage ist ausgerüstet mit einem Hgundotierten UV-Strahler mit einer Wellenlänge von 250 nm und einer Intensität von 200 W/cm.

Die Kaschierverklebung wurde mit 10 m/min durch die Anlage gefahren, wobei zur Erhöhung der Bestrahlungsdosis je Muster in mehreren Durchgängen bestrahlt wurden. Zur Analyse der klebtechnischen Eigenschaften wurde die Testmethode A durchgeführt.

### Beispiel 2

Analog zu Beispiel 1 wurde zur ES-initiierten Polymerisation 2 g Acrylsäure, 49 g n-Butylacrylat und 49 g 2-Ethylhexylacrylat eingesetzt. Die Reaktionsbedingungen wurden beibehalten. Nach der Bestrahlung wurden dem Syrup 0.5 Gew.-% Speedcure ITX™ (Fa Rahn), 0.2 Gew.-% Genomer 5248™ (Fa. Rahn) und 20 Gew.-% Norsolene RX 207™ (Fa. Cray Valley) beigemischt.

### Beispiel 3

Analog zu Beispiel 1 wurde zur ES-initiierten Polymerisation 1.5 g Acrylsäure, 0.5 g Ebecryl P 36™ (Fa. UCB), 49 g n-Butylacrylat und 49 g 2-Ethylhexylacrylat eingesetzt. Die Reaktionsbedingungen wurden beibehalten. Nach der Bestrahlung wurde der Syrup auf einen PP-Träger über ein Rakel mit 5 g/m² beschichtet. Kaschiert wurde mit einer zweiten PP-Folie.

### Beispiel 4

Analog zu Beispiel 3 wurde zur ES-initiierten Polymerisation 1.5 g Acrylsäure, 0.5 g Benzoinacrylat, 49 g n-Butylacrylat und 49 g 2-Ethylhexylacrylat eingesetzt. Die Reaktionsbedingungen wurden beibehalten. Nach der Bestrahlung wurde der Syrup auf einen PP-Träger über ein Rakel mit 5 g/m² beschichtet. Kaschiert wurde mit einer zweiten PP-Folie.

### Beispiel 5

Eine Mischung aus 3 g Acrylsäure, 97 g n-Butylacrylat und 10 g Novares TK 90™ (Fa. VFT Rüttgers) wurde entgast, mit Stickstoff abgesättigt und unter Sauerstoffauschluss in einen Polyethylenbeutel gefüllt und eingeschweisst. Der PE-Beutel besitzt eine silikonisierte Innenschicht und ist von außen mit Aluminium beschichtet. Dann wurde der Reaktor mit einer Co60 Quelle mit 100 Krad/h und einer Gesamtdosis von 15 Krad bestrahlt. Der Syrup wurde mit 0.5 Gew.-% Esacure KIP 150™ (Fa. Lamberti) abgemischt und auf einen PP-Träger über ein Rakel mit 5 g/m² beschichtet. Kaschiert wurde mit einer zweiten PP-Folie. Zur UV-Polymerisation und Härtung wurde analog Beispiel 1 vorgegangen Zur Beurteilung der Qualität der Kaschierverklebung wurden die Spaltkräfte mit einer Zugkraftmaschine gemessen. Die Ergebnisse sind in Tabelle 1 zusammengefasst.

| Tabelle 1 | | |
|---|---|---|
| Beispiel | Test A [N/cm] | Anzahl der UV-Durchgänge |
| 1 | 0.12 | 8 |
| 2 | 0.48 | 14 |
| 3 | 0.20 | 10 |
| 4 | 0.22 | 10 |
| 5 | 0.34 | 12 |
| Masseauftrag 5 g/m² | | |

Tabelle 1 belegt, dass durch die Comonomerzusammensetzung die Spaltkräfte der Kaschierverklebung eingestellt werden können. Im allgemeinen wird durch den Zusatz von Harzen die Spaltkraft erhöht. Die hierfür erforderlichen Harze können vor der ES-initiierten Polymerisation beigemischt werden (Beispiel 5) oder nach der ES-initiierten Polymerisation (Beispiel 2). Da die Harze eine regelnde Wirkung besitzen muss im Beispiel 5 eine höhere ES-Dosis aufgebracht werden. Für die UV-Polymerisation muss im Fall der Harz-abgemischten Systeme ebenfalls eine höhere UV-Dosis aufgewendet werden. Neben der konventionellen Zumischung von UV-Fotoinitiatoren können auch mit Doppelbindungen funktionalisierte Fotoinitiatoren als Monomere copolymerisiert werden (Beispiel 3 und 4).

## Patentansprüche

1. Verfahren zur Herstellung von Kaschierklebemassen, wobei aus einer Monomerzusammensetzung, die 70 bis 100 Gew.-% Acrylsäure und/oder Methacrylsäure-Derivate der allgemeinen Formel (I) enthält
CH₂=CH(R₁)(COOR₂) (I)
,mit R₁ = H oder CH₃ und R₂ = einer Alkylkette mit 2-20 C-Atomen, durch eine unter Elektronen-Bestrahlung initiierte Polymerisation ein Präpolymerisat hergestellt wird, das als UV-härtbare Kaschierklebemasse verwendbar ist.

2. Verfahren nach Anspruch 1, **dadurch gekennzeichnet, dass** das Präpolymerisat vor der Verwendung mit Monomeren der Monomerzusammensetzung aus Anspruch 1 abgemischt wird.

3. Verfahren nach Anspruch 1 oder 2, **dadurch gekennzeichnet, dass** für die Elektronen-Bestrahlung eine Co60- oder eine Cäsium 137-Quelle verwendet wird.

4. Verfahren nach einem der Ansprüche 1 bis 3, **dadurch gekennzeichnet, dass** die Bestrahlung mit einer Dosis größer 1 krad pro Stunde, aber kleiner 1 krad pro Sekunde, bevorzugt mit einer Dosisrate von 5 bis 250 krad pro Stunde durchgeführt wird.

5. Verfahren nach einem der Ansprüche 1 bis 4, **dadurch gekennzeichnet, dass** die Bestrahlung bis zu einer Gesamtdosis von 1 bis 50 krad durchgeführt wird.

6. Verfahren nach einem der Ansprüche 1 bis 5, **dadurch gekennzeichnet, dass** das Monomerengemisch bis zu einem Umsatz von 5 bis 50, vorzugsweise 5 bis 20 % präpolymerisiert wird.

7. Verfahren nach einem der Ansprüche 1 bis 6, **dadurch gekennzeichnet, dass** das Monomerengemisch weiterhin bis zu 30 Gew.-% bezogen auf die Acrylsäure- und Methacrylsäure-Derivate aus Anspruch 1 an olefinisch ungesättigten Monomeren mit funktionellen Gruppen enthält.

8. Verfahren nach einem der Ansprüche 1 bis 7, **dadurch gekennzeichnet, dass** den Monomeren oder dem Präpolymersyrup Harze, vorzugsweise in einem Gewichtsanteil zwischen 1 und 40 Gew.-% bezogen auf die Monomermasse, beigemischt werden.

9. Verfahren nach Anspruch 8, **dadurch gekennzeichnet, dass** als Harze Terpenharze, Terpenphenolharze, C5- und C9-Kohlenwasserstoffharze, Pinen- und Indenharze allein oder in Kombination miteinander eingesetzt werden.

10. Verfahren nach einem der Ansprüche 1 bis 9, **dadurch gekennzeichnet, dass** dem Präpolymer di- oder multifunktionelle Vernetzer zugesetzt werden, insbesondere multifunktionelle Acrylate und Methacrylate.

11. Verfahren nach einem der Ansprüche 1 bis 10, **dadurch gekennzeichnet, dass** dem Monomerengemisch und/oder dem Präpolymersyrup UV-Fotoinitiatoren, einzeln oder im Gemisch, vorzugsweise in Gewichtsanteilen zwischen 0,1 und 5 Gew.-%, weiter vorzugsweise zwischen 0,1 und 3 Gew.% bezogen auf die Präpolymermasse, zugesetzt werden.

12. Verfahren nach einem der Ansprüche 1 bis 11, **dadurch gekennzeichnet, dass** die UV-Vernetzung und Polymerisation beschleunigende Verbindungen zugesetzt werden.

13. Verfahren nach einem der Ansprüche 1 bis 12, **dadurch gekennzeichnet, dass** die Kaschierklebemasse auf einen Träger beschichtet wird.

14. Verfahren zur Ausführung einer Kaschierverklebung mit Hilfe einer nach einem der Ansprüche 1 bis 12 hergestellten Kaschierklebemasse, **dadurch gekennzeichnet, dass** die Kaschierklebemasse auf ein Trägermaterial beschichtet wird,
dass eine Kaschierverklebung auf einem zu kaschierenden Gegenstand durchgeführt wird und
dass danach das Laminat mit UV-Licht durchgehärtet wird.

15. Verfahren nach Anspruch 14, **dadurch gekennzeichnet, dass** das Laminat bis zu einem Umsatz größer 98,5 % durchgehärtet wird.

16. Verfahren nach Anspruch 14 oder 15, **dadurch gekennzeichnet, dass** die Härtung der Kaschierverklebung durch Bestrahlung in einem Wellenlängenbereich von 200 bis 400 nm und vorzugsweise mit einer Strahlerleistung von 80 bis 200 W/cm erfolgt.

17. Verfahren nach einem der Ansprüche 14 bis 16, **dadurch gekennzeichnet, dass** als Kaschiermaterialien Polyester-, PET-, PE-, PP-, BOPP- oder PVC-Folien und Papiere eingesetzt werden.

## Claims

1. Process for preparing laminating adhesives, in which from a monomer composition containing 70% to 100% by weight of acrylic acid and/or methacrylic acid derivatives of the general formula (I)
CH₂=CH (R₁) (COOR₂) (I)
where R₁ = H or CH₃ and R₂ = an alkyl chain having 2-20 carbon atoms
by an electron beam-initiated polymerization a prepolymer is prepared which can be used as a UV-curable laminating adhesive.

2. Process according to Claim 1, **characterized in that** the prepolymer is blended prior to use with monomers of monomer composition from Claim 1.

3. Process according to Claim 1 or 2, **characterized in that** a Co60 or a caesium 137 source is used for the electron beam irradiation.

4. Process according to one of Claims 1 to 3, **characterized in that** the irradiation is carried out with a dose of more than 1 krad per hour but less than 1 krad per second, preferably with a dose rate of 5 to 250 krad per hour.

5. Process according to one of Claims 1 to 4, **characterized in that** the irradiation is carried out up to a total dose of 1 to 50 krad.

6. Process according to one of Claims 1 to 5, **characterized in that** the monomer mixture is prepolymerized up to a conversion of 5% to 50%, preferably 5% to 20%.

7. Process according to one of Claims 1 to 6, **characterized in that** the monomer mixture further contains up to 30% by weight, based on the acrylic and methacrylic acid derivatives from Claim 1, of olefinically unsaturated monomers containing functional groups.

8. Process according to one of Claims 1 to 7, **characterized in that** the monomers or the prepolymer syrup are or is admixed with resins, preferably in a weight fraction of between 1% and 40% by weight, based on the monomer mass.

9. Process according to Claim 8, **characterized in that** resins used are terpene resins, terpenephenolic resins, C5 and C9 hydrocarbon resins, pinene resins and indene resins, alone or in combination with one another.

10. Process according to one of Claims 1 to 9, **characterized in that** difunctional or polyfunctional crosslinkers are added to the prepolymer, especially polyfunctional acrylates and methacrylates.

11. Process according to one of Claims 1 to 10, **characterized in that** UV photoinitiators, individually or in a mixture, are added to the monomer mixture and/or to the prepolymer syrup, preferably in weight fractions of between 0.1% and 5% by weight, more preferably between 0.1% and 3% by weight, based on the prepolymer mass.

12. Process according to one of Claims 1 to 11, **characterized in that** compounds which accelerate the UV crosslinking and polymerization are added.

13. Process according to one of Claims 1 to 12, **characterized in that** the laminating adhesive is coated onto a support.

14. Method of implementing a lamination bond by means of a laminating adhesive prepared according to one of Claims 1 to 12, **characterized in that** the laminating adhesive is coated onto a support material, **in that** a lamination bond is carried out on an article for lamination, and **in that** thereafter the laminate is through-cured with UV light.

15. Method according to Claim 14, **characterized in that** the laminate is through-cured up to a conversion of greater than 98.5%.

16. Method according to Claim 14 or 15, **characterized in that** the lamination bond is cured by irradiation in a wavelength range from 200 to 400 nm and preferably with an emitter output of 80 to 200 W/cm.

17. Method according to one of Claims 14 to 16, **characterized in that** laminating materials used are polyester, PET, PE, PP, BOPP or PVC films and papers.

## Revendications

1. Procédé de préparation de masses adhésives de contre-collage, en préparant, à partir d'une composition de monomères qui contient 70 à 100% en poids d'acide acrylique et/ou de dérivés de l'acide méthacrylique de formule générale (I)
CH₂=CH (R₁) (COOR₂) (I)
avec R₁ = H ou CH₃ et R₂ = une chaîne alkyle comprenant 2 à 20 atomes de carbone,
par une polymérisation initiée par une irradiation par des électrons, un prépolymère qui peut être utilisé comme masse adhésive de contre-collage durcissable aux UV.

2. Procédé selon la revendication 1, **caractérisé en ce que** le prépolymère est mélangé avec des monomères de la composition de monomères selon la revendication 1 avant l'utilisation.

3. Procédé selon la revendication 1 ou 2, **caractérisé en ce qu'**on utilise pour l'irradiation aux électrons une source de Co60 ou de césium 137.

4. Procédé selon l'une quelconque des revendications 1 à 3, **caractérisé en ce que** l'irradiation est réalisée à une dose supérieure à 1 Krad par heure, mais inférieure à 1 Krad par seconde, de préférence à un taux de dosage de 5 à 250 Krads par heure.

5. Procédé selon l'une quelconque des revendications 1 à 4, **caractérisé en ce que** l'irradiation est réalisée jusqu'à une dose totale de 1 à 50 Krads.

6. Procédé selon l'une quelconque des revendications 1 à 5, **caractérisé en ce que** le mélange de monomères est prépolymérisé jusqu'à une transformation de 5 à 50%, de préférence de 5 à 20%.

7. Procédé selon l'une quelconque des revendications 1 à 6, **caractérisé en ce que** le mélange de monomères contient en outre jusqu'à 30% en poids, par rapport aux dérivés de l'acide acrylique et de l'acide méthacrylique selon la revendication 1, de monomères oléfiniquement insaturés présentant des groupements fonctionnels.

8. Procédé selon l'une quelconque des revendications 1 à 7, **caractérisé en ce qu'**on mélange dans les monomères ou au sirop de prépolymère des résines, de préférence en une proportion pondérale entre 1 et 40% en poids par rapport à la masse de monomères.

9. Procédé selon la revendication 8, **caractérisé en ce qu'**on utilise comme résines des résines terpéniques, des résines de terpènephénol, des résines d'hydrocarbures en C₅ et C₉, des résines de pinène et d'indène, seules ou en combinaison les unes avec les autres.

10. Procédé selon l'une quelconque des revendications 1 à 9, **caractérisé en ce que** le prépolymère est additionné de réticulants difonctionnels ou polyfonctionnels, en particulier des acrylates et des méthacrylates polyfonctionnels.

11. Procédé selon l'une quelconque des revendications 1 à 10, **caractérisé en ce que** le mélange de monomères et/ou le sirop de prépolymères est additionné de photo-initiateurs UV, seuls ou en mélange, de préférence en des proportions pondérales entre 0,1 et 5% en poids, de manière particulièrement préférée entre 0,1 et 3% en poids par rapport à la masse de prépolymères.

12. Procédé selon l'une quelconque des revendications 1 à 11, **caractérisé en ce que** des composés accélérant la réticulation aux UV et la polymérisation sont ajoutés.

13. Procédé selon l'une quelconque des revendications 1 à 12, **caractérisé en ce que** la masse de contre-collage est revêtue sur un support.

14. Procédé pour réaliser un assemblage par contre-collage à l'aide d'une masse adhésive de contre-collage préparée selon l'une quelconque des revendications 1 à 12, **caractérisé en ce qu'**on revêt la masse adhésive de contre-collage sur un matériau support, **en ce qu'**on réalise l'assemblage par contre-collage sur un objet à contre-coller et **en ce qu'**on durcit ensuite le stratifié avec de la lumière UV.

15. Procédé selon la revendication 14, **caractérisé en ce que** le stratifié est durci à une transformation supérieure à 98,5%.

16. Procédé selon la revendication 14 ou 15, **caractérisé en ce que** le durcissement de l'assemblage par contre-collage est réalisé par irradiation dans une zone de longueurs d'onde de 200 à 400 nm et de préférence à une puissance d'irradiation de 80 à 200 W/cm.

17. Procédé selon l'une quelconque des revendications 14 à 16, **caractérisé en ce qu'**on utilise comme matériaux de contre-collage des feuilles en polyester, PET, PE, PP, BOPP ou PVC et des papiers.
